# EUROPEAN PATENT SPECIFICATION

(11) **EP 4 405 083 B1**
(45) Date of publication and mention of the grant of the patent: **26.02.2025**
(21) Application number: 21794187.1
(22) Date of filing: 21.09.2021
(51) Int. Cl.: B01D 53/38, B01D 53/88, C02F 1/72

(54) **FLOATING DEVICE FOR TREATING GASES EMITTED BY WASTEWATER, FLOATING DEVICES ARRANGEMENT AND CORRESPONDING GAS TREATING METHOD**
SCHWIMMENDE VORRICHTUNG ZUR BEHANDLUNG VON DURCH ABWASSER ABGEGEBENEN GASEN, SCHWIMMENDE VORRICHTUNGSANORDNUNG UND ZUGEHÖRIGES GASBEHANDLUNGSVERFAHREN
DISPOSITIF FLOTTANT DESTINÉ AU TRAITEMENT DES GAZ ÉMIS PAR DES EAUX USÉES, AGENCEMENT DE DISPOSITIFS FLOTTANTS ET PROCÉDÉ DE TRAITEMENT DE GAZ CORRESPONDANT

(43) Date of publication of application: 31.07.2024
(73) Proprietor: IGNASI CLOTET S.L.U., 25230 Mollerussa (ES)
(72) Inventor: CLOS PIJUÁN, Joan, 25230 Mollerussa (ES); CABA MUNTADA, Joan, 25230 Mollerussa (ES)
(74) Representative: Curell Suñol S.L.P.
(86) International application number: PCT/IB2021/000607
(87) International publication number: WO 2023/047146

(56) References cited:
- EP-A1- 1 697 234
- EP-B1- 1 697 234
- CN-A- 111 359 600
- FR-A1- 2 963 572
- US-A- 5 194 161
- US-A- 5 256 616
- US-A1- 2001 008 657
- US-A1- 2012 294 787
- US-B1- 6 524 997

## Description

### Field of the invention

The invention relates to a floating device for treating gases emitted by wastewater contained in a wastewater container, said floating device comprising a first surface which in use is oriented towards the wastewater surface, a second surface, opposite to said first surface.

The invention also relates to a floating devices arrangement for treating gases emitted by wastewater contained in a wastewater container, such as a pond, a lagoon, a pool, a tank, or the like.

The invention also relates to a method for treating gases emitted by wastewater contained in a wastewater container, such as a pond, a lagoon, a pool, a tank, or the like.

### State of the art

Wastewater generated from a variety of industries, including farms, slaughterhouses, food processing industry, dairy industry, and others, represents a serious threat to the environment and its ecosystems if not properly treated. Typically, wastewater streams from these industries are loaded with solids and contain large amounts of organic matter coming from both plant and animal origin. Therefore, such water streams require treatment in specialized purification plants before they can be released to the environment.

It is common for wastewater of these origins to be stored in wastewater containers such as ponds, lagoons, pools, tanks, reservoirs or the like of different shapes and sizes. Said stored wastewater can be stored for months waiting to be used for irrigation or fertilization purposes on fields, during specific periods of the year when irrigation and fertilization with said wastewater is allowed. Stored wastewater is rich in organic matter and quickly becomes depleted of oxygen creating anaerobic conditions. Under such anaerobic conditions, anaerobic microorganisms can convert organic materials in stable organic compounds such as carbon dioxide and methane. That is why the storage of wastewater is usually used as an anaerobic treatment step to reduce the organic load or chemical oxygen demand (COD) of wastewater before said wastewater can be used for irrigation or fertilization purposes and/or be transported to a plant where other secondary treatments are performed so said wastewater can be safely returned to the environment. While said anaerobic treatment favours degradation of organic compounds occurring in the wastewater, they represent a source of pollutants in the form of gases that are emitted by the wastewater to the atmosphere. Examples of said gases are on the one hand the end products of anaerobic degradation, such as carbon dioxide (CO₂) and methane (CH₄).

On the other hand, other gaseous compounds, such as for example nitrous oxide (N₂O), nitrogen oxides (NOx), ammonia (NH₃) or hydrogen sulphide (H₂S), are generated as by-products of microorganism metabolism in said anaerobic conditions occurring in the wastewater. Said gases can be emitted in large amounts to the atmosphere and represent a threat to environment and its ecosystems. Said gases not only compromise the air quality of the surrounding areas, but they can also cause acidic rains that can have harmful effects on plants, animals, and infrastructure, even in locations far away from the emission site, due to their ability to be transported by clouds and winds, causing important environmental and economic damages. These gases are also known due to their greenhouse effect and their emissions are contributing to worsen the problem of global warming and its consequences worldwide. Lastly, some of said gases such as methane or hydrogen sulphide are responsible for very unpleasant odours often emitted from said wastewater storage facilities, forcing them to be located far from inhabited communities.

Currently, there are limited solutions to manage the emissions of said gases emitted from wastewater in said wastewater storage facilities.

One strategy involves the collection and treatment of the generated gases downstream from the wastewater treatment plant. This requires the storage of wastewater to be performed in closed sites, so gases are contained and can be collected. Gases need to be transported to the treatment site, which often is not available close the industrial or agricultural sites where said wastewater is stored. The treatment of the collected gaseous streams involves several steps such as washing, condensation, adsorption onto dry or wet adsorbents, often requiring specific chemical treatments for each type of gas, therefore requiring a costly infrastructure that in turn generates further waste that requires further treatment. It must be noted that in industrial sites that do not have such infrastructures available, gases must be transported to the treatment plants, with the increased associated costs.

A second strategy, often the only available cost-effective solution, is to minimize emissions by covering the wastewater container. A variety of systems to cover such sites have been developed aiming to minimize evaporation and controlling the temperature of the body of liquid, thus limiting the emissions of gases and odours.

For example, EP1697234B1 discloses product for covering liquid surfaces with the purpose of reducing the evaporation from the liquid or stabilizing the temperature of the liquid.

However, while helping to manage the emissions of gases emitted by wastewater, none of these systems are suitable for the treatment of said gases. Furthermore, these covering systems are not 100% gas tight, and consequently they still allow untreated gases to leak into the environment. Even worse, when the covers need to be replaced.

In this case, gases that have accumulated under them are inevitably released to the atmosphere.

US 2001/008657 A1 discloses a floating/sinking body for purification, capable of efficiently utilizing photocatalytic functional layers, easily removing decomposition products and further capable of maintaining photocatalytic function even during electricity failure or after turning off the light, and a purification tank efficiently using the floating/sinking body.

CN 111359600 A discloses a waste gas pollutant treatment ball loaded with composite modified nanometer TiO₂. The wastewater and waste gas pollutant treatment ball comprises an active microporous ball, the composite modified nanometer TiO₂ and a plant-extracted photosensitizer or strong oxidant, wherein the composite modified nanometer TiO₂ and the plant-extracted photosensitizer orstrong oxidant are sequentially loaded on the active microporous ball.

FR 2963572 A1 discloses a device for covering a surface of a tank containing a liquid emitting harmful gaseous effluents, comprising ballasted free elements disposed on a surface of a layer. The free elements are less dense than the liquid and have an external design with a material having catalytic properties and a density gradient. The free elements are spherical in shape, have a density of 0.8-1.2, and comprise a core having an external surface, which is covered with a material. The core is made of a material including metals with weak density, cork, polystyrene and plastics.

Therefore, there is a strong need for better systems for treating gases emitted by wastewater that are easy to deploy and cost effective.

### Summary of the invention

It is an object of the invention to provide a floating device for treating gases emitted by wastewater contained in a wastewater container of the type indicated at the beginning that provides a simpler and more effective way to treat the gases in situ.

This purpose is achieved by a floating device of the type indicated at the beginning, characterized in that said floating device further comprises a photocatalytic surface arranged on at least part of the surface of said floating device, such that in use, that is when the floating device is floating on the wastewater surface, when said gases emitted by said wastewater flow by said photocatalytic surface, said gases are treated by photocatalysis.

The floating device of the invention allows for the treatment of gases emitted by wastewater contained in a wastewater container in a simple manner.

In the context of the invention the term "*wastewater*" refers to used water obtained from industrial processes, including agriculture, either as final product, but also as a byproduct in an intermediate industrial process. Therefore, wastewater according to the invention can contain substances such as chemicals, volatile organic compound, organic matter, scrap, oil, soap or other residues causing this water to emit gases that must be treated and that should not be freed in the environment without a previous purification.

In the context of the invention the term "*container*" refers any wastewater containing facility such as a pond, a lagoon, a pool, a tank, a reservoir or the like.

In the context of the invention, "*photocatalytic surface*" refers to a surface of that has photocatalytic properties. This photocatalytic surface can be formed by arranging a layer of material with photocatalytic properties by a number of coating methods. Examples of said methods include dip coating, roll coating, spraying, spin coating, flow coating, or any other technique allowing to deposit a layer of said material with photocatalytic properties on the surface of the floating device. Alternatively, this photocatalytic surface can be formed by manufacturing the photocatalytic device using a first material with photocatalytic properties or using a second material that comprises the first material with photocatalytic properties such that once formed, the surface of said photocatalytic device preserves the photocatalytic properties.

In the context of the invention, the "*photocatalytic properties*" are such that the photocatalytic surface can perform photocatalysis. This means that the photocatalytic surface reacts with molecules (H₂O) when exposed to UV light generating highly reactive hydroxyl (OH) and oxygen (O) radicals.

Evaporation at the surface of the wastewater contained in a wastewater container generates water vapour that is emitted together with the gases. The photocatalytic surface catalyses a series of chemical reactions that lead to the photocatalytic splitting of water molecules and the generation of highly reactive OH and O radicals around said photocatalytic layer upon activation by UV light.

The UV light can be natural (i.e. sunlight during daytime) or artificial (i.e. UV LED lamps during night-time). The OH and O radicals can react with organic molecules present in the gases emitted by said wastewater, thus treating them by photocatalysis. For example, hydrocarbon gases such as methane (CH₄), that flow by or contact the photocatalytic layer, converting them into harmless compounds such as carbon dioxide (CO₂) and water (H₂O). Said OH and O radicals can also react with nitrogen rich gaseous pollutants such as nitrous oxide (N₂O), nitrogen oxides (NOx) or ammonia (NH₃), converting them to harmless atmospheric nitrogen (N₂) through different reactions.

In the context of the invention "*flow by said photocatalytic surface*" means to flow in close proximity to said photocatalytic surface, even contacting said photocatalytic surface in order for the gases to be treated by photocatalysis.

Preferably, the floating device according to the invention is a floating device for treating gases emitted by wastewater contained in a wastewater container in situ.

In the context of the invention, the terms "*in situ*" in general and more particularly in the phrase "*treating gases emitted by a wastewater contained in a wastewater container in situ*" means that gases emitted are not transported to a different location to be treated with the floating device of the invention and are therefore treated at the location where they are emitted. Gases can flow or diffuse a certain distance over the wastewater before they reach the floating device but no step of transferring the gases or conducting the gases towards a treatment reactor or station is required.

The invention further includes a number of preferred features that are object of the dependent claims and the utility of which will be highlighted hereinafter in the detailed description of an embodiment of the invention.

Preferably said wastewater is contained in an open wastewater container.

Said floating device can have a variety of different shapes, such as a polyhedral shape, or a spherical shape, and other non-limiting variations of said shapes.

Preferably, to increase the photocatalytic surface by which gases emitted by the wastewater can flow by and obtain a more optimal treatment of the gases, while optimally covering most of the surface of wastewater the floating device further comprises a prismatic section connecting said first and second surfaces, said prismatic section having a cross section among one of the group consisting of triangular, quadrangular or hexagonal. This allows to considerably reduce the size of the floating device and use a plurality of identical floating devices arranged forming a floating devices arrangement to cover the wastewater surface in sort of a puzzle arrangement.

Preferably, a plurality of said floating devices can self-arrange to form a floating devices arrangement. In this floating devices arrangement, at least one first side from said prismatic section of each floating devices of said plurality of floating devices is facing one second side of the prismatic section of a neighbouring floating device, such that the floating devices arrangement covers at least a part of the surface of said wastewater contained in said wastewater container.

Preferably, said photocatalytic surface is arranged on the surface of said prismatic section. This ensures that gases emitted by the wastewater are treated as soon as possible after they leave the wastewater surface. Furthermore, the surface of the prismatic surface extends along the path of gases, thus obtaining a more efficient treatment of the gases as the surface of said prismatic section of the floating device is exposed to gases emitted by the wastewater as soon as they reach the wastewater surface. This embodiment is particularly advantageous when a plurality of floating devices is deployed over a wastewater to form a floating devices arrangement. Then, gases emitted from said wastewater are directed to flow through the spaces in between the floating devices and flow by the photocatalytic surface arranged on the surface of said prismatic section and be treated by photocatalysis. Therefore, arranging the photocatalytic surface on the surface of said prismatic section of the floating devices results in an improved treatment of gases emitted by the wastewater and a reduced amount of untreated gas emitted to the environment.

Preferably, to increase the photocatalytic surface available on the floating device and increase its treating capacity, said floating device further comprises at least one first opening extending in the direction from said first surface to said second surface, said at least one first opening defining a first inner surface, and said photocatalytic surface is arranged at least on said first inner surface of said at least one first opening. Thus, gases emitted by the wastewater flow through this at least one first opening and flow by the photocatalytic surface arranged on the inner surface to be treated photocatalysis. Preferably to simplify the production of the device and force the gas to flow by the photocatalytic surface said at least one first opening extends in a direction which in use of the device is vertical.

Preferably, said floating device further comprises a plurality of first openings, each first opening of the plurality of first openings extending in the direction from said first surface to said second surface, and each first opening defining a first inner surface, and said photocatalytic surface is arranged at least on said first inner surface of each first opening. The number of first openings can be adjusted depending on the wastewater to be treated thus providing means to adjust the treating capacity and the flow of gases through said floating device according to particular needs. Preferably said plurality of first openings extend in a direction that in use of the device is vertical.

Preferably, said first surface of the floating device is convex. In this embodiment, the shape of the first surface facing the water is convex. This avoids that gas emitted by the wastewater remain trapped under the floating device and do not flow by the photocatalytic surface. Gases generated in the wastewater ascend through the wastewater and reach the floating device. The convex shape of the first surface directs gases towards the edge of the floating device, thus avoiding that they remain trapped under said floating device and ensuring they leave the wastewater so they can flow by the photocatalytic surface and be treated by photocatalysis.

Preferred examples of convex shapes for the first surface of said floating device are a dome-shape surface or multifaceted pyramidal surface. These shapes efficiently allow the gases rising through the wastewater body and reaching said first surface to be directed towards the edge of the floating device.

Preferably, said first surface has a slope of at least 1% from the edge of to the centre of the floating device, ascending from said edge to said centre of the floating device. This slope of at least 1% is advantageous to ensure gases are not trapped under the floating device.

Preferably, said second surface of the floating device is convex. The convex shape of said second surface avoids the accumulation of solids on top of said second surface and allows it to be easily cleaned by rainwater, or by an operator using a hose, a pressure water gun or the like, or by means of an automated jet or spray cleaning system or the like, provided over the wastewater surface. This is important as any excess of solid particles or other residues that could accumulate on said second surface of the floating device and could lead to the blockage of the photocatalytic surface.

Preferred examples of convex shapes for said second surface of the floating device are a dome-shape surface or multifaceted pyramidal surface.

Preferably, said second surface is convex and has a slope of at least 1% from the edge of to the centre of the floating device. This slope of at least 1% is advantageous to ensure that water from rain or from washing can flow towards the edges of the floating device and does not accumulate on top of it. Additionally, the convex shape of said second surface is advantageous for the self-assembly of a plurality of floating devices of the invention to form a floating devices arrangement according to the invention, when said plurality of floating devices is deployed over the wastewater, as it avoids the stacking or piling up of the plurality of floating device on top of each other. After the plurality of floating devices has been deployed over the wastewater surface, a first floating device that falls on top of a second floating device will slide over the convex second surface of said first floating device and place itself in an adjacent position to the same. This is particularly beneficial in combination with a convex shape of the first surface as described above.

Preferably, said floating device further comprises a plurality of ribs protruding from at least said first surface and/or from at least said second surface, each of said ribs extending from the edge to the centre of said floating device. The presence of ribs protruding from either the first surface, the second surface or both solves the problem of increasing the surface of the floating device exposed to the gases emitted by the wastewater without excessively increasing the volume nor the weight of the floating device. Increasing the surface of the floating device is advantageous as it allows more space to arrange a photocatalytic surface and therefore treat more gases by photocatalysis.

More preferably, said ribs define an arch shaped path from said edge to said centre of the floating device. The fact that each of said ribs define an arch-shaped path from the edge of the floating device to the centre of the floating device has the advantage of increasing the ribs surface, and therefore the surface of the ribs exposed to gases. This increases the area where a photocatalytic surface can be arranged, thus increasing the amount of gases that can be treated by photocatalysis with the floating device.

The presence of ribs, particularly on the first surface, that in use the surface is facing the wastewater surface, also improves the stability of the floating device, avoiding unwanted flipping of the floating device and preventing it to be blown away by wind.

More preferably, the height of said ribs increases from said edge to said centre of the floating device. The fact that the height of said ribs increases from the edge to the centre of the floating device allows the floating device to maintain its convex volume shape, thus avoiding a plurality of floating devices to stack on top of each other and contributing to the self-assembly of said plurality of floating device to form a floating devices arrangement according to the invention when arranged on the wastewater.

More preferably, at least one rib of said plurality of ribs comprises a second opening, said second opening extending through said rib in the direction from said first surface to said second surface and defining a second inner surface, and in that said photocatalytic surface is arranged at least on said second inner surface. Preferably said ribs of said plurality of ribs extend in a direction that in use of the device is vertical.

The presence of a second opening on at least one rib of said plurality of ribs that extends the rib in a direction from the first surface to the second surface of the floating device and defines a second the inner surface increases the amount of paths through the floating device for gases to cross through. The second inner surface defined by the second opening on at least on rib provides a particularly advantageous location of the photocatalytically surface to be arranged on the floating device and increases the available surface for photocatalysis to occur. The least one rib comprising a second opening actively promotes the flow of gas from the surface of the wastewater through the floating device due the Stack effect or chimney effect created by the difference in temperature between gasses entering the openings on the ribs and gases exiting the floating device through the opposite side after having crossed the floating device. This Stack effect can further be promoted by heating the surface of the ribs by exposing them to sunlight or to artificial heat from, for example IR lamps or the like, thus favouring the circulation of gas by the photocatalytic surface on said inner surfaces defined by said second openings.

Preferably, said photocatalytic surface is arranged such that it completely covers said floating device. In the context of the invention, the expression "*completely covers*" is to be understood meaning that all surfaces of the floating device. This preferred embodiment of the invention is advantageous as it provides a maximum photocatalytically active area available on the floating device and maximizes the generation of OH and O radicals around the floating device, maximizing its capacity to treat gases emitted by the wastewater. In addition, this preferred embodiment simplifies the manufacturing process of said floating device by removing the need to place the photocatalytic surface in specific locations, allowing for cost-effective methods such as immersion coating to be used.

Preferably, said photocatalytic surface comprises metal oxide nanoparticles. Metal oxides are efficient photocatalysts due to the favourable combination of their electronic structure, light absorption properties, charge transport characteristics and excited lifetimes. In addition, metal oxide nanoparticles benefit from the inherent properties of materials at the nanoscale and therefore are more efficient photocatalysts, with due to their increased surface to volume ratio. Metal oxide nanoparticles are efficient photocatalysts under the high humidity and UV exposure conditions around the photocatalytic surface that covers at least partially the floating devices of the invention.

Preferably, said photocatalytic surface comprises at least one metal oxide nanoparticles among the group consisting of titanium oxide nanoparticles, silica dioxide nanoparticles, zirconium dioxide, aluminium trioxide nanoparticles and metal oxide-zeolite nanoparticles or a mixture thereof.

In a preferred embodiment, the photocatalytic surface comprises titanium dioxide nanoparticles, and said photocatalytic surface further comprises one or more metal oxide nanoparticles among the group consisting of silica dioxide nanoparticles, zirconium dioxide, aluminium trioxide nanoparticles, and metal-oxide zeolite nanoparticles.

Nanoparticles made of titanium dioxide are a preferred photocatalyst to include in the photocatalytic surface arranged on the floating device. Titanium dioxide is inexpensive, highly stable chemically and the photogenerated holes are highly oxidizing, thus strongly promoting the formation of OH and O radicals by the photocatalytic surface that allow the gases emitted by the wastewater to be treated by photocatalysis.

The invention also relates to a floating devices arrangement for treating gases emitted by wastewater contained in a wastewater container, characterized in that it comprises a plurality of floating devices according to the invention adjacently arranged to one another, with said first surface being oriented towards the wastewater surface, and said plurality of floating devices having as many floating devices arranged adjacent to one another such that said arrangement covers at least 95% of said wastewater surface. The floating devices arrangement of the invention solves the problem of improving the efficiency of treating gases emitted by the wastewater by the floating device. The floating devices arrangement is formed when a plurality of floating devices according to the invention is deployed on the surface of the wastewater contained in a wastewater container such that they are adjacent to one another maximizing the surface covered at the nearest separation to one another. It is advantageous to cover as much surface of the wastewater contained in the wastewater container as possible to avoid untreated gases to escape to the atmosphere. By covering at least 95% of the surface of the wastewater contained in the wastewater container with said floating devices arrangement, gases emitted from said wastewater are forced to flow through the spaces in between said floating devices and flow by the photocatalytic surface arranged at least on a part of the surface of the floating devices.

Combining a plurality of floating devices to form a floating arrangement according to the invention is an efficient way to use the said floating device to treat gases. It is especially preferable to use floating devices having a prismatic section connecting said first and second surfaces said prismatic section having a cross section among one of the group consisting of triangular, quadrangular or hexagonal. This kind of cross sections provide for the creation of a puzzle structure such that the covered surface is maximized.

By having a plurality of floating devices arranged such that that at least one side of the prismatic section of a first floating device is facing one side of the prismatic section of a neighboring floating device, a plurality of spaces between floating devices is created and gases emitted by the wastewater are directed to flow through said spaces to reach the atmosphere, thus flowing by the photocatalytic surface arranged on at least a part of each floating device. Thus, the floating devices arrangement according to the invention maximizes the amount of gases emitted by the wastewater that are treated by photocatalysis and minimizing the amount of untreated gas that reaches the atmosphere and minimized the amount of untreated gases that are emitted to the atmosphere.

Especially preferably, said floating devices arrangement covers 99% of the surface of the wastewater contained in the wastewater container.

Finally, the invention also relates to a method for treating gases emitted by wastewater contained in a wastewater container, said method comprising the following steps: arranging a plurality of floating devices according to the invention adjacently to one another, with said first surface being oriented towards the wastewater surface, and said plurality of floating devices having as many floating devices arranged adjacent to one another such that said arrangement covers at least 95% of said wastewater surface, exposing said plurality of floating devices to UV light, such that when said gases emitted by said wastewater flow by said photocatalytic surface, said gases are treated by photocatalysis, such that water vapor present at the surface of the wastewater can be photocatalytically split into OH and O radicals.

The method according to the invention provides a simpler a more effective way to treat the gases in situ.

Likewise, the invention also includes other features of detail illustrated in the detailed description of several embodiments of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 shows a top view of a first embodiment of the floating device for treating gases emitted by wastewater according to the invention.
Figure 2 shows a front view of the first embodiment of the floating device for treating gases emitted by wastewater of Figure 1.
Figure 3 shows a schematical cross-section view along plane C-C of the first embodiment of the floating device for treating gases emitted by wastewater of Figure 1.
Figure 4 shows a top view of a first embodiment of the floating devices arrangement for treating gases emitted by wastewater according to the invention comprising a plurality of floating devices such as the one shown in Figures 1-3.
Figure 5 shows a front view of the arrangement of Figure 4, with a schematic representation of the path followed by the gases to be treated through said floating arrangement.
Figure 6 shows a detailed view of the space in between two adjacent floating devices of the floating arrangement shown in Figure 4 and 5 and a schematic representation of the photocatalytic treatment of gases emitted by wastewater.
Figure 7 shows an isometric top view of a second embodiment of the floating device for treating gases emitted by wastewater according to the invention.
Figure 8 shows a detailed view of the second embodiment of the floating device of Figure 7.
Figure 9 shows an isometric bottom view of the second embodiment of the floating device of Figure 7.
Figure 10 shows a top view of the second embodiment of the floating device shown in Figures 7-9.
Figure 11 shows a detailed top view of the central part of the floating device shown in Figure 10.
Figure 12 shows a front view of the second embodiment of the floating device shown in Figures 7-9.
Figure 13 shows a top view of a second embodiment of the floating devices arrangement according to the invention comprising a plurality of the floating devices shown in Figures 7 to 12.
Figure 14 shows a schematic section view of the wastewater container with the second embodiment of the floating devices arrangement according to the invention shown in Figure 13.
Figure 15 shows a front view of a portion of the second embodiment of the floating devices arrangement of Figures 13 and 14 with a schematic representation of the gases flowing through said floating devices arrangement.
Figure 16 shows a detailed view of the space in between two adjacent floating devices shown in Figures 13-15 and a schematic representation of the photocatalytic treatment of gases emitted by wastewater.
Figure 17 shows an isometric top view of a third embodiment of the floating device for treating gases emitted by wastewater according to the invention.
Figure 18 shows a detailed view of the third embodiment of the floating device of Figure 17.
Figure 19 shows an isometric bottom view of the third embodiment of the floating device of Figure 17.
Figure 20 shows a top view of the third embodiment of the floating of Figures 17-19.
Figure 21 shows a detailed top view of the central part of the third embodiment of the floating device of Figures 17-20.
Figure 22 shows a front view of the third embodiment of the floating device for treating gases emitted of Figures 17-21.
Figure 23 shows an isometric top view of a fourth embodiment of the floating device for treating gases emitted by wastewater according to the invention.
Figure 24 shows an isometric bottom view of the fourth embodiment of the floating device of Figure 23.
Figure 25 shows a top view of the fourth embodiment of the floating device for treating gases of Figures 23-24.
Figure 26 shows a detailed top view of the central part of the floating device of Figures 23-25.
Figure 27 shows a side view of the fourth embodiment of the floating device of Figures 23-27.
Figure 28 shows a top isometric view of a fifth embodiment of the floating device for treating gases emitted by wastewater according to the invention.
Figure 29 shows a bottom isometric view of the fifth embodiment of the floating device of Figure 28.
Figure 30 shows a top view of the fifth embodiment of the floating device of Figures 28-29.
Figure 31 shows a front view of the fifth embodiment of the floating device of Figures 28-30.
Figure 32 shows a section view of the fifth embodiment of the floating device through the plane E-E shown in Figure 30.
Figure 33 shows a section view of the fifth embodiment of the floating device through the plane F-F shown in Figure 30.
Figure 34 shows a section view of the fifth embodiment of the floating device through the plane G-G shown in Figure 30.

### Detailed description of embodiments of the invention

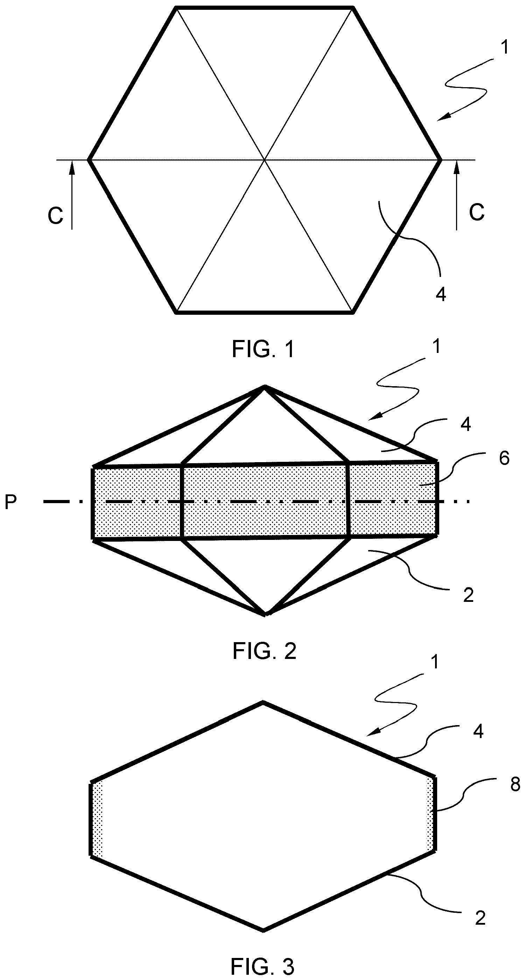

Figures 1 to 3 show a first embodiment of the floating device 1 for treating gases 16 emitted by wastewater W contained in a wastewater container. The floating device 1 comprises a first surface 2 which in use is oriented towards the wastewater surface. In the context of the invention, "*oriented towards the wastewater surface*" is to be understood as that in use said first surface 2 is at least partially in contact with the wastewater surface. The floating device 1 further comprises a second surface 4, opposite to the first surface 2. In the context of the invention, the wording "*opposite to said first surface*" means said second surface 4 is on the opposite side the first surface 2 with respect to the horizontal floating plane P . The first surface 2 is convex and is shaped as a multifaceted pyramid. The second surface 4 is also convex and is also shaped as a multifaceted pyramid. In an alternative embodiment, said first and second surfaces 2, 4 could be dome shaped.

In this particular non limiting embodiment the floating device 1 further comprises a prismatic section 6 connecting the first and second surfaces 2, 4, the prismatic section 6 having a hexagonal cross-section.

The floating device 1 further comprises a photocatalytic surface 8 arranged on at least part of the surface of said floating device 1. Thanks to this photocatalytic surface 8, in use, the gases 16 emitted by the wastewater flow by the photocatalytic surface 8 to be treated by photocatalysis.

In this embodiment of the floating device 1 according to the invention, the photocatalytic surface 8 is arranged on the surface of the prismatic section 6. For illustrative purposes the photocatalytic surface 8 is shown as a dotted area in Figures 2 and 3.

In the context of the invention, the photocatalytic surface 8 is a surface that has photocatalytic activity. Photocatalytic activity means that said photocatalytic surface can generate highly reactive hydroxyl (OH) and oxygen (O) radicals by photocatalytically splitting water molecules (H₂O) when exposed to UV light. In this embodiment, the photocatalytic surface comprises titanium dioxide nanoparticles and the titanium dioxide nanoparticles provide the photocatalytic properties to the photocatalytic surface. In alternative embodiments, other metal oxide nanoparticles could be used. Examples of said other metal oxide nanoparticles include silica dioxide nanoparticles, zirconium dioxide, aluminium trioxide nanoparticles and metal oxide-zeolite nanoparticles or a mixture thereof.

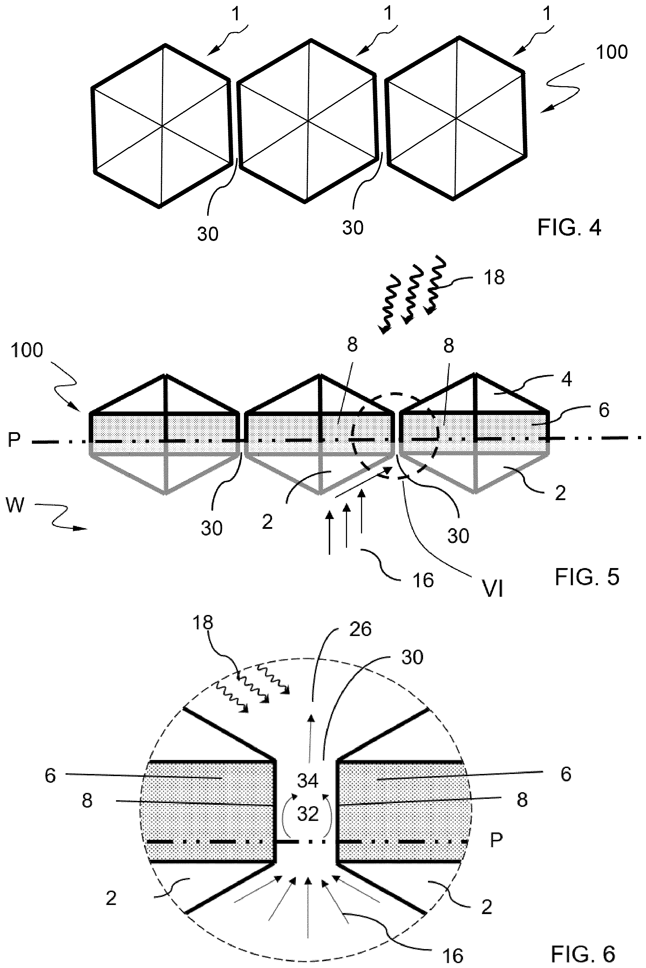

Figures 4 to 6 show a first embodiment of the floating devices arrangement 100 for treating gases 16 emitted by wastewater contained in a container according to the invention. The floating devices arrangement 100 comprises a plurality of floating devices 1 according to the invention, in particular a plurality of floating devices such as the one shown in Figures 1-3 are adjacently arranged to one another, with the first surface 2 being oriented towards the wastewater surface. Furthermore, the plurality of floating devices 1 has as many floating devices 1 arranged adjacent to one another such that the arrangement covers at least 95% of said wastewater surface P. In this particular embodiment the limits of the wastewater surfaces defined by the container are not shown.

In this arrangement the prismatic section 6 of a first floating device 1 is facing one side of the prismatic section 6 of a neighboring floating device 1 to minimize the space between them. In the context of the invention, "*two sides facing one another*" can be in contact or be adjacent to each other with said sides being parallel one to another. The floating devices arrangement 100 is formed from a plurality of floating devices 1 that are deployed on the surface of any wastewater, preferably, wastewater stored in a pond, a lagoon, a pool, a container, a tank, reservoirs or the like and form a floating devices arrangement 100 according to the invention.

Once deployed over the surface of a wastewater contained in a container, the floating devices arrangement 100 covers the surface of said wastewater almost completely and preferably at least a 95% of the wastewater surface. The number of floating devices of the plurality of floating devices 1 needed to completely cover the wastewater surface will depend on the surface to be covered and can be adjusted accordingly.

Figure 2 shows a front view of a portion of the floating arrangement 100. The floating arrangement 100 comprises a plurality of spaces 30 in between two adjacent floating devices 1, the spaces 30 corresponding to the interface between one side of a prismatic section 6 of a first floating device 1 with the one side of the prismatic section 6 of a neighbouring floating device 1.

The photocatalytic surface 8 is arranged on the prismatic section 6 of the floating devices 1 and allows photocatalysis to occur in said spaces 30. Evaporation at the surface of the water body P (dash-dotted line) generates water vapor 32. When the floating devices 1 are exposed to UV light 18, either from sunlight during daytime or from an artificial UV lamp (LED or the like) during nighttime, said titanium dioxide nanoparticles in the photocatalytic surface 8 react with said water vapor 32 that has accumulated in said spaces 30 generating free OH and O radicals 34.

Gases 16 generated in the wastewater migrate to the wastewater surface P. Said gases 16 comprise carbon dioxide and methane, end products of anaerobic degradation of organic matter by microorganisms present in the wastewater body, and other gaseous compounds (i.e. NOx, NH₃, H₂S) that are generated as by-products of microorganism metabolism in anaerobic conditions. When encountering the first surfaces 2 of the plurality of floating devices 1 comprised in the floating devices arrangement 100, the gases 16 are directed towards the spaces 30 in between two floating devices 1. There, organic components contained in said gases 16, such as CH₄, react with the OH and O radicals 34 and are broken down to CO₂ and H₂O. Nitrogen rich compounds contained in said gases 16, such as NH₃ and NOx, also react with said OH and O radicals 34 and are converted to gaseous N₂. After crossing the floating devices arrangement 100, the treated gases 26 have a reduced concentration of toxic compounds.

The embodiments below share most of the features of the previously described embodiments. Therefore, below only those features which are different from the previous embodiments are described, while for the features in common, reference is made to the previous paragraphs.

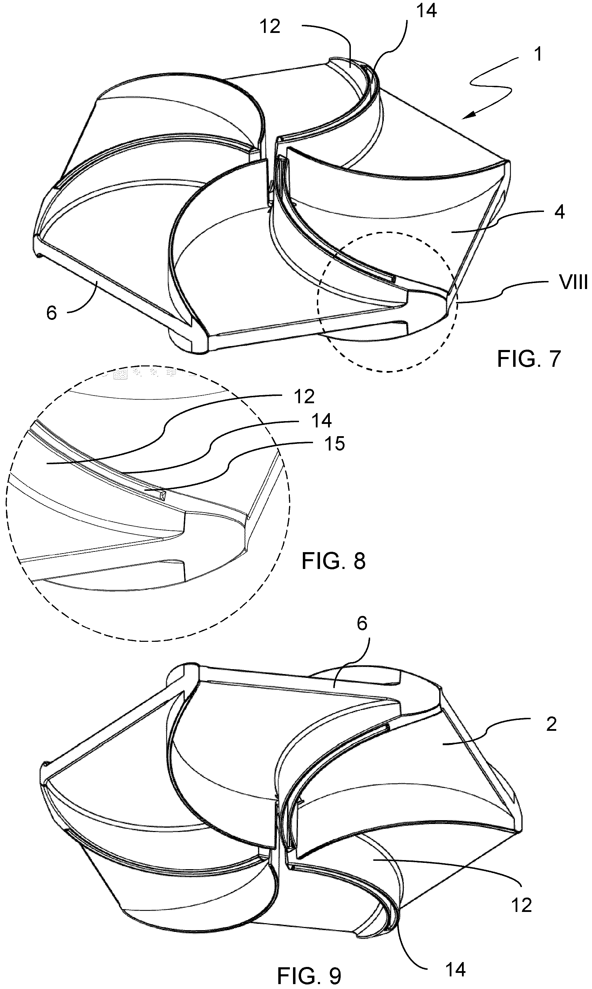

Figures 7 to 12 show a second embodiment of the floating device 1 for treating gases 16 emitted by wastewater contained in a wastewater container 44 according to the invention.

In this second embodiment, the floating device 1 comprises a first surface 2 which in use is oriented towards the wastewater surface. The floating device 1 further comprises a second surface 4, opposite to the first surface 2.

In this embodiment, the first surface 2 and the second surface 4 of the floating device 1 are convex. The first surface 2 and the second surface 4 are dome shaped and have a slope of 2.5% from the centre to the edge of the floating device 1. In this preferred embodiment, the floating device 1 further comprises a first opening 10 extending in the direction from the first surface 2 to said second surface 4, in particular in the vertical direction in use. In alternative embodiments, this direction could be inclined with respect to the vertical plane. The first opening 10 defines an inner surface 11, and the first opening 10 being arranged in the centre of said floating device 1.

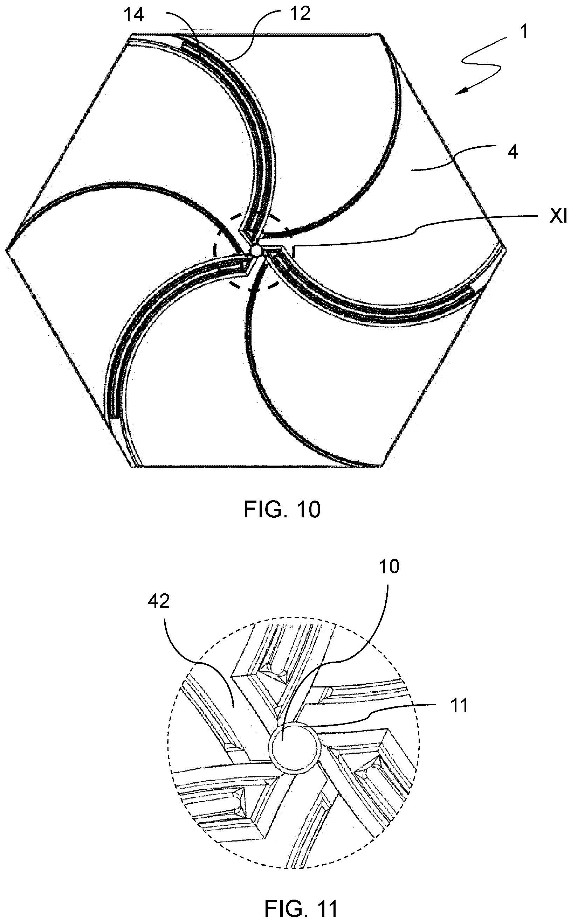

Figure 11 shows a detailed view of the centre of said floating device 1 with the first opening 10. The floating device 1 further comprises six ribs 12 protruding from the first surface 2 and the second surface 4, each of the ribs extending from said edge to said centre of said floating device 1. The ribs 12 define an arch shaped path from the edge to the centre of the floating device 1. In this embodiment, the height of the ribs 12 increases from the edge to the centre of the floating device 1.

Every second rib of said plurality of ribs 12 comprises a second opening 14. This second opening 14 extends through the rib 12 in the direction from the first surface 2 to the second surface 4, in the vertical direction. Furthermore, this second opening 14 defines a second inner surface 15. In this embodiment, the photocatalytic surface 8 is arranged such that it completely covers the floating device 1 and comprises titanium dioxide nanoparticles. In the context of the invention, the expression "*completely covers*" is to be understood meaning that all surfaces of the floating device 1, including the first surface 2, the second surface 4, the prismatic section 6, the ribs 12, and the first inner surface 11 and the second inner surfaces 15 of the at least one first opening 10 extending through the floating device 1 and the second openings 14 extending through the ribs 12, are covered by the photocatalytic surface 8 comprising titanium oxide nanoparticles. However, it would be possible to have the photocatalytic surface only covering a part of the surface of the floating device, preferably covering areas highly exposed to gases 16 emitted by the wastewater body such as the prismatic section 6 or the first and second inner surfaces 11, 15 of the first and second openings 10, 14 provided on the floating device 1 and the ribs 12 respectively.

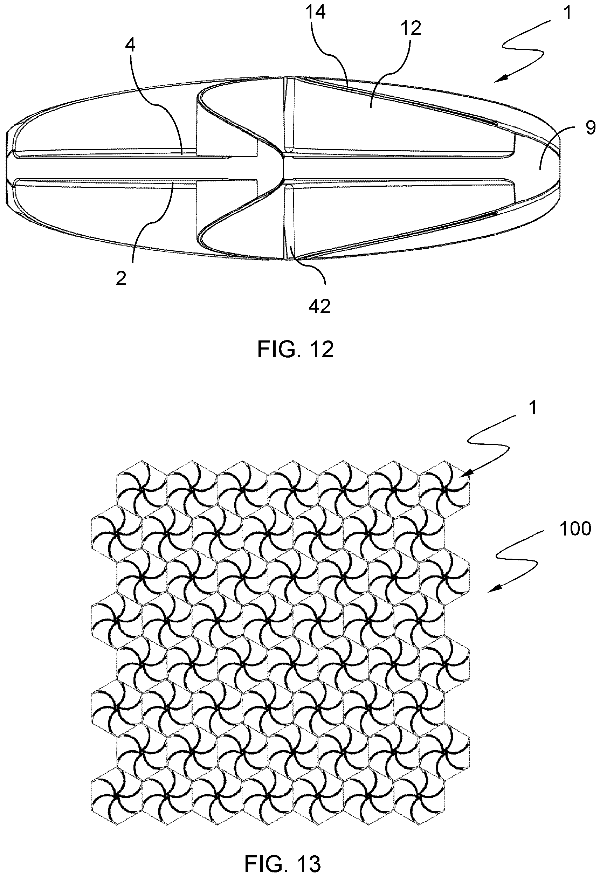

Figures 13 to 16 show a second embodiment of the floating devices arrangement 100 for treating wastewater contained in a wastewater container 44 according to the invention. The floating arrangement 100 comprises a plurality of floating devices 1 according to the invention arranged such that the first surface 2 is oriented towards the wastewater surface and that at least one side of the prismatic section 6 of each floating device 1 is facing one side of the prismatic section 6 of a neighboring floating device 1. The floating devices 1 shown in Figures 7 to 12 can be deployed on the surface of a wastewater contained in a wastewater container 44 such as wastewater stored in a pond, a lagoon, a pool, a container, a tank, a reservoir or any similar structure, including any of those built directly on the ground and form said floating devices arrangement 100.

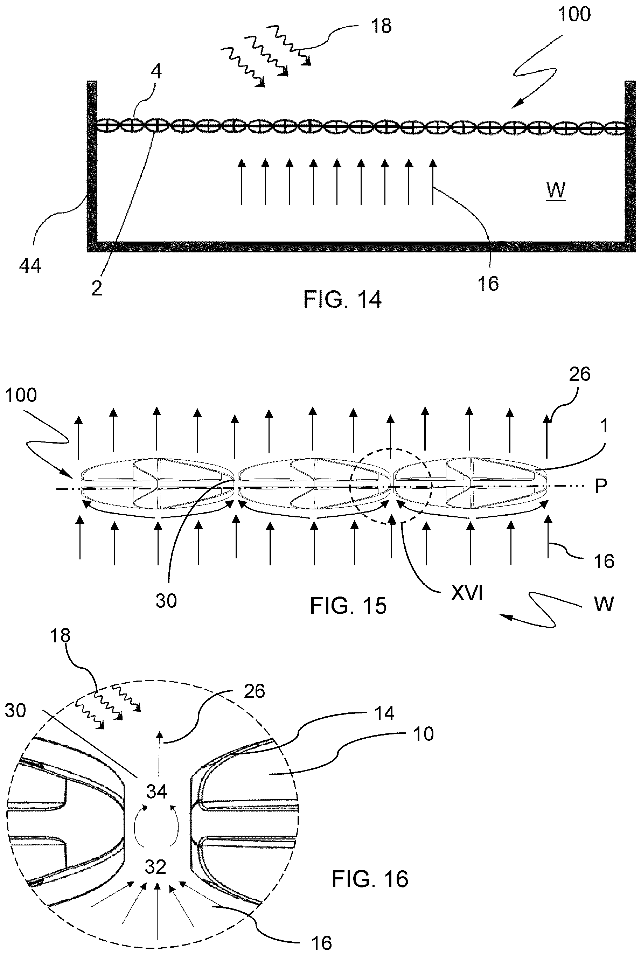

The number of floating devices 1 needed to form the floating devices arrangement 100 will depend on the surface of wastewater to be covered. Figure 14 shows how the wastewater surface is covered at least a 95%.

Figure 15 shows a schematic representation of gases 16 emitted from the wastewater body W interacting with the floating devices arrangement 100. Gases 16 reaching the surface P of the wastewater body W encounter said floating devices 1 and can cross the floating devices arrangement 100 through the spaces 30 in between the floating devices 1 to be treated by photocatalysis.

Figure 16 shows a schematic representation of gases 16 crossing the floating devices arrangement 100 through the space 30 and being treated by photocatalysis. When encountering the first surfaces 2 of the plurality of floating devices comprised in the floating devices arrangement 100, the gases 16 are directed towards the spaces 30 in between two floating devices 1. There, organic components contained in said gases 16, such as CH₄, react with the OH and O radicals 34 and are broken down to CO₂ and H₂O. Nitrogen rich compounds contained in said gases 16, such as NH₃ and NOx, also react with said OH and O radicals 234 and are converted to gaseous N₂. Said photocatalytic treatment of the emitted gases 16 also occurs as gases 16 cross the floating device through the second openings 14 provided on the ribs 12 and flow by the second inner surfaces 15 of the second openings 14. Gases 16 are attracted to the second openings 14 in the ribs 10 due to the chimney effect generated by the difference of temperatures between the surface of the wastewater and the air on top of the floating device 1 and are forced to flow by the photocatalytic surface and be treated by photocatalysis. After crossing the floating arrangement 100, the treated gases 26 have a reduced concentration of toxic compounds.

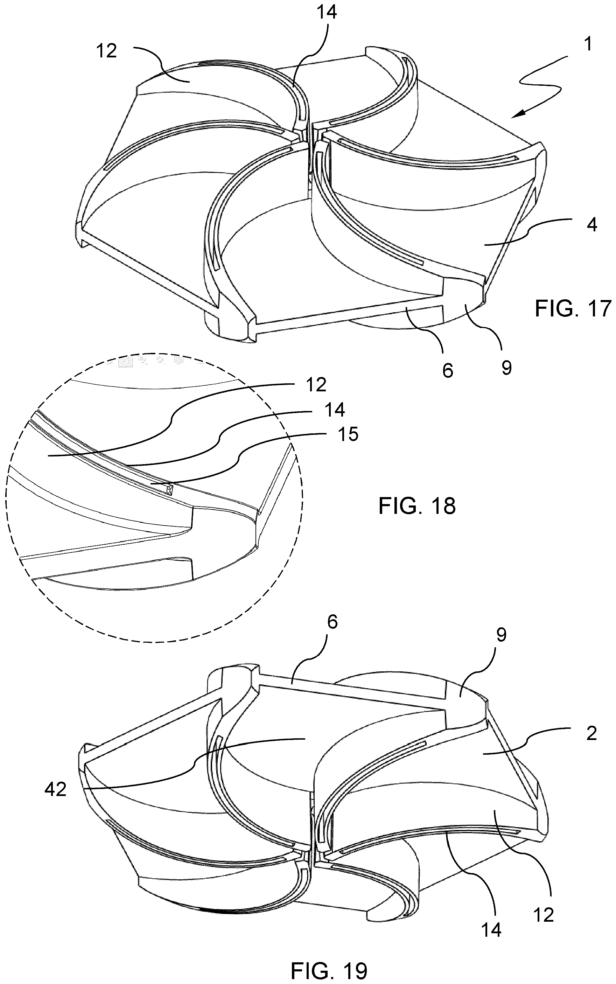

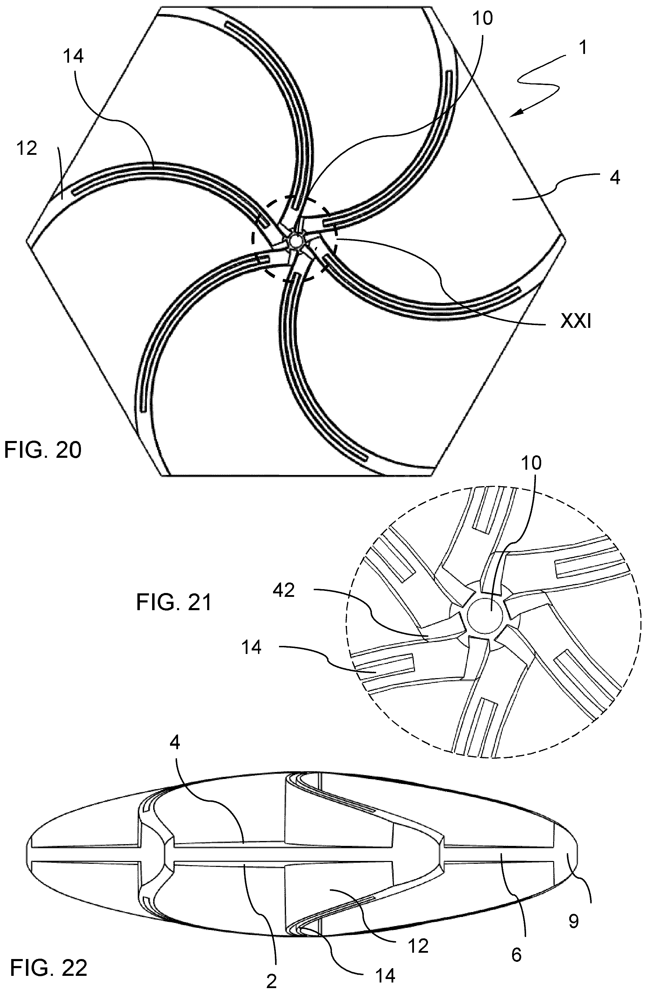

Figures 17 to 22 show a third embodiment of the floating device 1 for treating gases 16 emitted by wastewater contained in a wastewater container according to the invention. The third embodiment shares all the features of the previously described second embodiment of the floating device according to the invention. Additionally, in this third embodiment, each rib 12 of the plurality of ribs comprises a second opening 14. The second opening 14 extends through the rib 12 in the direction from said first surface 2 to said second surface 4 and defines a second inner surface 15.

In this embodiment, the photocatalytic surface 8 is arranged such that it covers completely the floating device 1 and comprises titanium dioxide nanoparticles. However, alternative arrangements of the photocatalytic 8 layer are possible, preferably covering areas highly exposed to gases 16 emitted by the wastewater body such as the prismatic section 6 or the first and second inner surfaces 11, 15 of the first and second openings 10, 14 provided on the floating device 1 and the ribs 12 respectively.

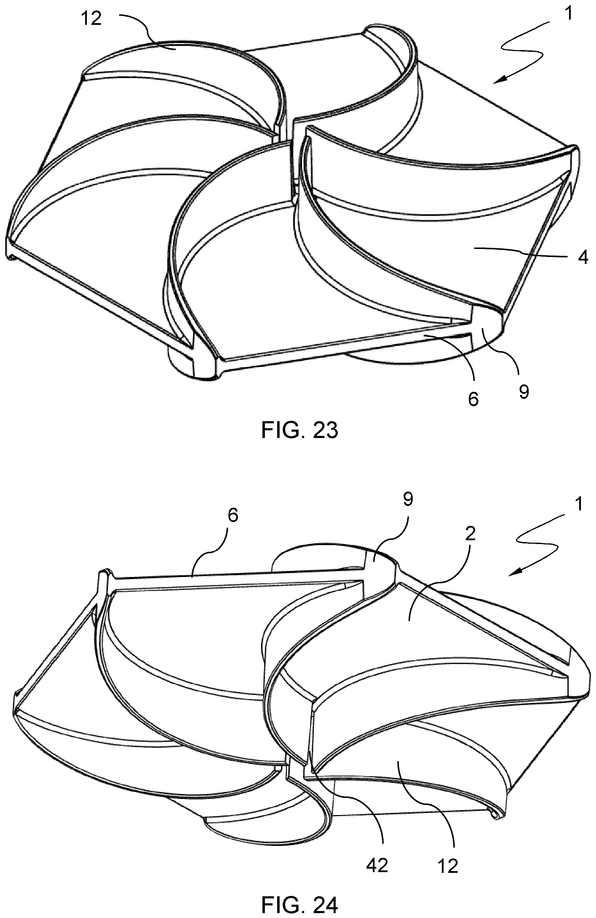

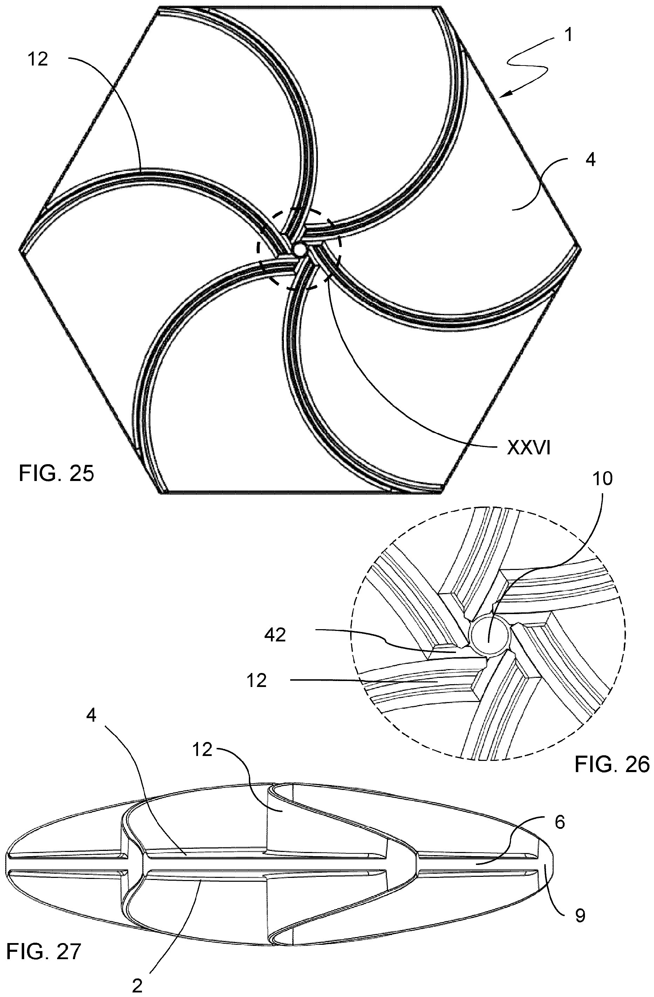

Figures 23 to 27 show a fourth embodiment of the floating device 1 for treating gases 16 emitted by wastewater contained in a wastewater container according to the invention. The fourth embodiment shares all the features with the first embodiment of the floating device for treating gases 16 emitted by wastewater contained in a wastewater container previously described.

In this fourth embodiment, the floating device 1 further comprises at least one first opening 10 extending in the direction from said first surface 2 to said second surface 4, said at least one first opening 10 defining an inner surface. In this embodiment, said first surface 2 and said second surface 4 are convex. The first surface 2 and the second surface 4 are dome shaped and have a slope of 2.5% from the centre to the edge of the floating device 1. In this embodiment, the floating device 1 further comprises a plurality of ribs 12 protruding from the first surface and the second surface 4, each of the ribs extending from the edge to the centre of said floating device 1. The ribs 12 define an arch shaped path from the edge to the centre of the floating device. In this embodiment, the height of said ribs 12 increases from the edge to said centre of the floating device 1.

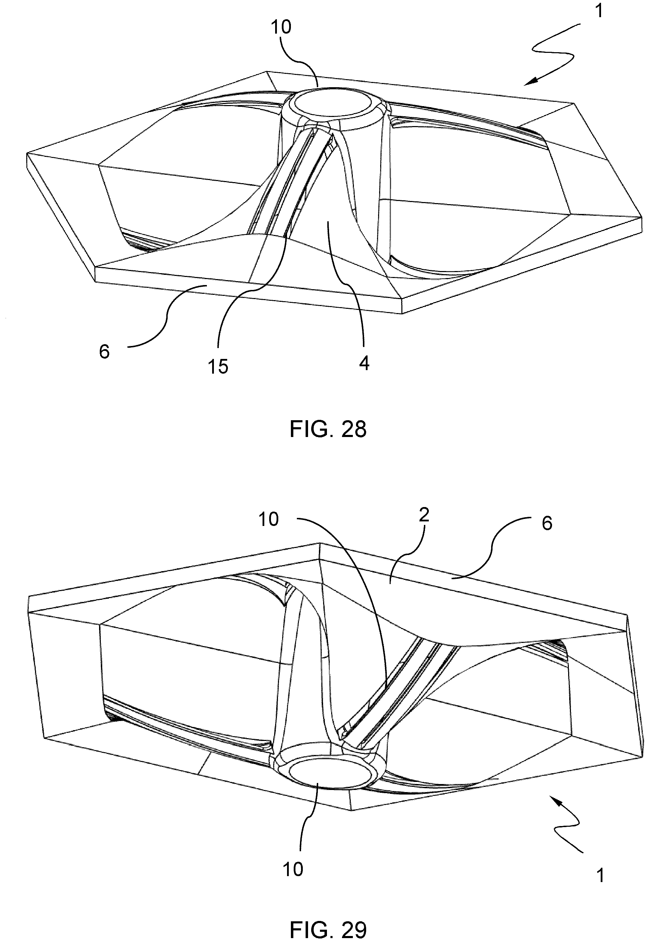

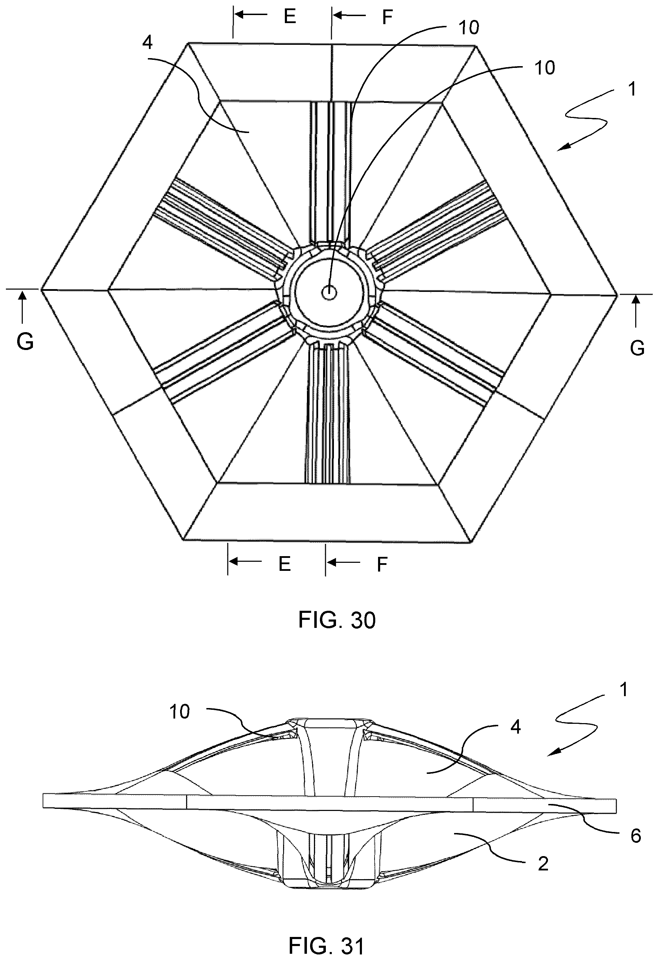

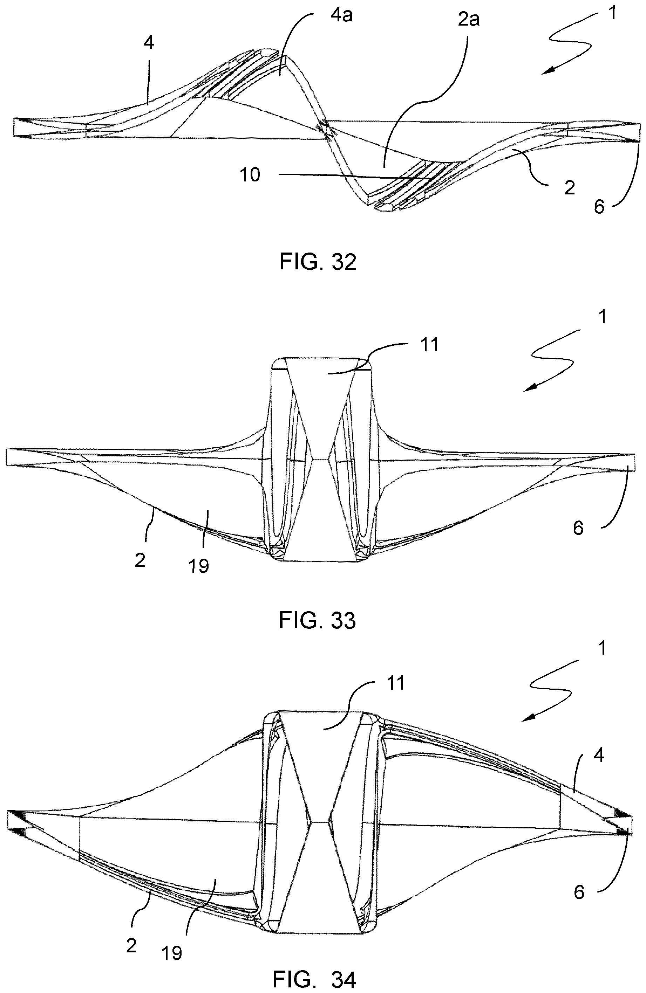

Figures 28 to 34 show a fifth embodiment of the floating device 1 for treating gases 16 emitted by wastewater contained in a wastewater container according to the invention. Said floating device 1 comprises a first surface 2 which in use is oriented towards the wastewater surface. The floating device 1 further comprises a second surface 4, opposite to said first surface 2. In this preferred embodiment said first surface 2 and said second surface 4 are convex. The first surface 2 and the surface 4 are arranged in an alternate manner such as they define a wave-shaped profile in the E-E plane, orthogonal to the horizontal floating plane. Particularly, the first and second surfaces 2, 4 define a plurality of hills 4a and valleys 6a from the edge to the center of the floating device 1. In this embodiment, the floating device 1 further comprises a plurality of first openings 10 extending in the direction from said first surface 2 to said second surface 4, said at least one first opening 10 defining a plurality of first inner surface 11. One of said plurality of first openings 10 is located at the centre of the floating device 1. The remaining first openings 10 of the plurality of first openings are slot-shaped and are evenly arranged on the surface of the floating device 1 defining a series of radial paths from the edge to the centre of the floating device 1.

### Example 1: treatment of gases emitted from wastewater generated in a quail slaughterhouse using a preferred embodiment of the floating devices arrangement of the invention.

A quail slaughterhouse generates 100 m³ / day of wastewater working in 12h a day on weekdays, for a total of 500 m³/ week. Working 220 days/ year this results in 22.000 m³ of wastewater generated each year.

A first solid removing step is performed for removing gross solid from said wastewater W is performed. In this embodiment, said first solid removing step is performed in a feather separator. Then, a second solid removing step for removing fine solids from said wastewater W is performed in a fine solids separator 800 µm. Next, an anaerobic digestion step during which said wastewater W is stored in a rectangular (15m x 30m x 5.5m) anaerobic lagoon with a capacity of 2500 m³ filled at 4/5 of its capacity to save empty space for excess production peaks or emergencies.

Sludges from the bottom of the anaerobic lagoon, accumulated during excess production peaks are regularly removed using a tanker or a tractor and can be used to fertilized crops.

As a secondary treatment, said wastewater W from the anaerobic lagoon is circulated to a biologic reactor working 365 days / year with an average flowrate of 60 m³/day, being fed at a flowrate of 2.5 m³/h.

The secondary treatment plant is a rectangular reactor with a 1000 m³ capacity (20 m x 12,5 m x 4 m) connected to the exit of the anaerobic lagoon. In particular, the WTP is nitrification-denitrification reactor that alternates aeration cycles with anoxic cycles, connected to a secondary decanter that sends treated waters to the municipal treatment station, and sludges to a well from which a tanker can collect them for their use to fertilize crops.

The following table shows water parameters for wastewater at the entry of the wastewater lagoon, at the exit of said wastewater lagoon and at the exit of said secondary treatment plant before it is sent to the municipal treatment station.

| **WATER PARAMETERS** | **Entry stream (kg/day)** | **Entry stream (kg/Year)** | **Exit stream (kg/Year)** | **Exit stream from NDN reactor (mg/L)** |
|---|---|---|---|---|
| COD (Chemical Oxygen Demand); mg O2/L | 4700 | 103400 | 100885 | 150 |
| SS (suspended solids); mq/L | 834 | 18348 | 16300 | 80 |
| Total Nitrogen (Kjedhal); mq N/L | 700 | 15400 | 13724,65 | 50 |
| NH3 (ammonia nitrogen); mq/L NH3/L | 500 | 11000 | 9324,65 | 48 |
| TP (total phosphorous); mg Phosphorous/L | 200 | 4400 | 3800 | 8 |
| Oils and fat; mq/L | 30 | 660 | 30 | 0 |
| pH; UpH | 8,7 | 8,7 | 8,7 | 8,7 |

The wastewater W stored in the anaerobic lagoon emits gases comprising toxic compounds and unpleasant odors. These can be monitored by using a gas collection bell equipped with sensors for methane (CH₄), ammonia (NH₃), nitrous oxide (N₂O), carbon dioxide (CO₂) and nitrogen (N₂) connected to a datalogger with daily log that can continuously monitor the composition of said emitted gases.

To treat said gases emitted from said wastewater W stored in said anaerobic lagoon, eliminating toxic compounds and unpleasant odors from said gases, a plurality of floating devices 1 such as the floating devices shown in Figures 7-12 are arranged to at least partially cover the wastewater surface, such that said first surface 2 is oriented towards the wastewater surface and that at least one side of the prismatic section 6 of a first floating device 1 is facing one side of the prismatic section 6 of a neighboring floating device 1. In this embodiment, each floating device is formed in polypropylene.

The cross-section of each floating device is hexagonal with a diameter of 20 cm, so each floating has a total surface of 260 cm² from which 5,5 cm² are openings on the wastewater surface 10. Thus, in this embodiment, 97% of wastewater surface covered by said plurality of floating devices. In this embodiment, said floating devices 1 comprise a photocatalytic surface 8, said photocatalytic surface 8 being a photocatalytic layer 8 comprising titanium oxide nanoparticles applied using a dip coating process on the surface of said floating devices during manufacturing. Once arranged, said plurality of floating devices 1 are exposed to UV light from sunlight during daytime, such that said gases 16 said photocatalytic surface 8 are treated by photocatalysis. UV light during daytime comes from sunlight.

The composition of gases 16 emitted by said wastewater stored in an anaerobic lagoon before and after implementing the method according to the invention is measured. Results are showed in the following table:

| **WATER PARAMETERS** | **GAS EMISSIONS ANAEROBIC TANK (kg/day) without photocatalytic arrangement** | **GAS EMISSIONS ANAEROBIC TANK (kg/year) without photocatalytic arrangement** | **GAS EMISSIONS ANAEROBIC TANK (kg/year) with photocatalytic arrangement** | **REDUCTION/ INCREASE %** |
|---|---|---|---|---|
| NH3 (ammonia nitrogen); kg NH3/day | 4,59 | 1675,35 | 75,4 | -95,5 |
| CH4 (methane); kg CH4/day | 6,89 | 2514,85 | 113,2 | -95,5 |
| N2O (nitrous oxide); kg N2O/day | 0,23 | 83,95 | 3,8 | -95,5 |
| Odours % | 100 | 36500 | 1 | -99 |
| CO2 (carbon dioxide); kg CO2/day | 1,7 | 620,5 | 3022,2 | 79,5 |
| N2 (atmospheric N2); kg N2/day | 0,1 | 36,5 | 1680,1 | 97,8 |

## Claims

1. A floating device (1) for treating gases (16) emitted by wastewater contained in a wastewater container, said floating device (1) comprising
[a] a first surface (2) which when the floating device is floating on the wastewater surface is oriented towards said wastewater surface (P),
[b] a second surface (4), opposite to said first surface (2), and
[c] a photocatalytic surface (8) arranged on at least part of the surface of said floating device (1), such that when the floating device is floating on the wastewater surface, when said gases (16) emitted by said wastewater flow by said photocatalytic surface, said gases are treated by photocatalysis,
**characterized in that** said floating device (1) further comprises
[d] at least one first opening (10) extending in the direction from said first surface (2) to said second surface (4), said at least one first opening (10) defining an inner surface, and
[e] said photocatalytic surface (8) is arranged at least on said inner surface of said one first opening (10).

2. Floating device (1) according to claim 1, **characterized in that** it further comprises
[a] a prismatic section (6) connecting said first and second surfaces (2, 4),
[b] said prismatic section (6) having a cross section among one of the group consisting of triangular, quadrangular or hexagonal.

3. The floating device (1) according to claim 2, **characterized in that** said photocatalytic surface (8) is arranged on the surface of said prismatic section (6).

4. The floating device (1) according to any of claims 1 to 3, **characterized in that** said first surface (2) is convex.

5. The floating device (1) according to any of claims 1 to 4, **characterized in that** said second surface (4) is convex.

6. The floating device (1) according to any of claims 1 to 5, **characterized in that** said floating device (1) further comprises a plurality of ribs (12) protruding from at least said first surface (2) and/or at least said second surface (4), each of said ribs extending from the edge to the centre of said floating device (1).

7. The floating device (1) according to claim 6, **characterized in that,** said ribs (12) define an arch shaped path from said edge to said centre of said floating device.

8. The floating device (1) according to any of claims 6 or 7, **characterized in that** the height of said ribs (12) increases from said edge to said centre of said floating device.

9. The floating device according to claim to any of claims 6 to 8, **characterized in that** at least one rib (12) of said plurality of ribs comprises a second opening (14), said second opening (14) extending through said rib (12) in the direction from said first surface to said second surface and defining a second inner surface (15), and **in that** said photocatalytic surface (8) is arranged at least on said second inner surface.

10. The floating device (1) according to any of claims 1 to 9, **characterized in that** said photocatalytic surface (8) is arranged such that it covers completely said floating device (1).

11. The floating device (1) according to any of claims 1 to 10, **characterized in that** said photocatalytic surface (8) comprises metal oxide nanoparticles.

12. The floating device (1) according to claim 11, **characterized in that** said photocatalytic surface (8) comprises at least one metal oxide nanoparticles among the group consisting of titanium dioxide nanoparticles, silica dioxide nanoparticles, zirconium dioxide, aluminium trioxide nanoparticles and metal oxide-zeolite nanoparticles or a mixture thereof.

13. A floating devices arrangement (100) for treating gases (16) emitted by wastewater contained in a wastewater container, **characterized in that** it comprises a plurality of floating devices (1) according any of claims 1 to 12 adjacently arranged to one another, with said first surface (2) being oriented towards the wastewater surface, and said plurality of floating devices (1) having as many floating devices (1) arranged adjacent to one another such that said arrangement covers at least 95% of said wastewater surface (P).

14. A method for treating gases (16) emitted by wastewater (W) contained in a wastewater container, **characterized in that** said method comprises the following steps:
[a] arranging a plurality of floating devices according to claims 1 to 12 adjacently to one another, with said first surface (2) being oriented towards the wastewater surface, and said plurality of floating devices (1) having as many floating devices (1) arranged adjacent to one another such that said arrangement covers at least 95% of said wastewater surface (P),
[b] exposing said plurality of floating devices (1) to UV light, such that when said gases (16) emitted by said wastewater flow by said photocatalytic surface, said gases are treated by photocatalysis.

## Patentansprüche

1. Schwimmende Vorrichtung (1) zur Behandlung von durch Abwasser, das in einem Abwasserbehälter enthalten ist, abgegebenen Gasen (16), wobei die schwimmende Vorrichtung (1) umfasst:
[a] eine erste Oberfläche (2), die, wenn die schwimmende Vorrichtung auf der Abwasseroberfläche schwimmt, auf die Abwasseroberfläche (P) ausgerichtet ist,
[b] eine zweite Oberfläche (4), die der ersten Oberfläche (2) gegenüberliegt, und
[c] eine photokatalytische Oberfläche (8), die auf mindestens einem Teil der Oberfläche der schwimmenden Vorrichtung (1) angeordnet ist, so dass, wenn die schwimmende Vorrichtung auf der Abwasseroberfläche schwimmt, wenn die von dem Abwasser abgegebenen Gase (16) an der photokatalytischen Oberfläche vorbeiströmen, die Gase durch Photokatalyse behandelt werden,
**dadurch gekennzeichnet, dass** die schwimmende Vorrichtung (1) ferner umfasst
[d] mindestens eine erste Öffnung (10), die sich in der Richtung von der ersten Oberfläche (2) zu der zweiten Oberfläche (4) erstreckt, wobei die mindestens eine erste Öffnung (10) eine innere Oberfläche definiert, und
[e] die photokatalytische Oberfläche (8) zumindest auf der inneren Oberfläche der einen ersten Öffnung (10) angeordnet ist.

2. Schwimmende Vorrichtung (1) nach Anspruch 1, **dadurch gekennzeichnet, dass** sie ferner umfasst:
[a] einen prismatischen Abschnitt (6), der die erste und die zweite Oberfläche (2, 4) verbindet,
[b] wobei der prismatische Abschnitt (6) einen Querschnitt aus der Gruppe bestehend aus dreieckig, viereckig oder sechseckig aufweist.

3. Schwimmende Vorrichtung (1) nach Anspruch 2, **dadurch gekennzeichnet, dass** die photokatalytische Oberfläche (8) auf der Oberfläche des prismatischen Abschnitts (6) angeordnet ist.

4. Schwimmende Vorrichtung (1) nach einem der Ansprüche 1 bis 3, **dadurch gekennzeichnet, dass** die erste Oberfläche (2) konvex ist.

5. Schwimmende Vorrichtung (1) nach einem der Ansprüche 1 bis 4, **dadurch gekennzeichnet, dass** die zweite Oberfläche (4) konvex ist.

6. Schwimmende Vorrichtung (1) nach einem der Ansprüche 1 bis 5, **dadurch gekennzeichnet, dass** die schwimmende Vorrichtung (1) ferner eine Vielzahl von Rippen (12) umfasst, die von mindestens der ersten Oberfläche (2) und/oder mindestens der zweiten Oberfläche (4) vorstehen, wobei sich jede der Rippen vom Rand zur Mitte der schwimmenden Vorrichtung (1) erstreckt.

7. Schwimmende Vorrichtung (1) nach Anspruch 6, **dadurch gekennzeichnet, dass** die Rippen (12) eine bogenförmigen Bahn vom Rand zur Mitte der schwimmenden Vorrichtung definieren.

8. Schwimmende Vorrichtung (1) nach einem der Ansprüche 6 oder 7, **dadurch gekennzeichnet, dass** die Höhe der Rippen (12) vom Rand zur Mitte der schwimmenden Vorrichtung hin zunimmt.

9. Schwimmende Vorrichtung nach einem der Ansprüche 6 bis 8, **dadurch gekennzeichnet, dass** mindestens eine Rippe (12) der Vielzahl von Rippen eine zweite Öffnung (14) aufweist, wobei sich die zweite Öffnung (14) durch die Rippe (12) in Richtung von der ersten Oberfläche zu der zweiten Oberfläche erstreckt und eine zweite innere Oberfläche (15) definiert, und dadurch, dass die photokatalytische Oberfläche (8) mindestens auf der zweiten inneren Oberfläche angeordnet ist.

10. Schwimmende Vorrichtung (1) nach einem der Ansprüche 1 bis 9, **dadurch gekennzeichnet, dass** die photokatalytische Oberfläche (8) so angeordnet ist, dass sie die schwimmende Vorrichtung (1) vollständig bedeckt.

11. Schwimmende Vorrichtung (1) nach einem der Ansprüche 1 bis 10, **dadurch gekennzeichnet, dass** die photokatalytische Oberfläche (8) Metalloxid-Nanopartikel umfasst.

12. Schwimmende Vorrichtung (1) nach Anspruch 11, **dadurch gekennzeichnet, dass** die photokatalytische Oberfläche (8) mindestens Metalloxid-Nanopartikeln aus der Gruppe bestehend aus Titandioxid-Nanopartikeln, Siliziumdioxid-Nanopartikeln, Zirkoniumdioxid, Aluminiumtrioxid-Nanopartikeln und Metalloxid-Zeolith-Nanopartikeln oder eine Mischung davon umfasst.

13. Anordnung (100) von schwimmenden Vorrichtungen zur Behandlung von durch Abwasser, das in einem Abwasserbehälter enthalten ist, abgegebenen Gasen (16), **dadurch gekennzeichnet, dass** sie eine Vielzahl von schwimmenden Vorrichtungen (1) nach einem der Ansprüche 1 bis 12 umfasst, die benachbart zueinander angeordnet sind, wobei die erste Oberfläche (2) zur Abwasseroberfläche hin ausgerichtet ist und die Vielzahl von schwimmenden Vorrichtungen (1) so viele schwimmende Vorrichtungen (1) aufweist, die benachbart zueinander angeordnet sind, dass die Anordnung mindestens 95% der Abwasseroberfläche (P) abdeckt.

14. Verfahren zur Behandlung von durch Abwasser (W), das in einem Abwasserbehälter enthalten ist, abgegebenen Gasen (16), **dadurch gekennzeichnet, dass** das Verfahren die folgenden Schritte umfasst:
[a] eine Vielzahl von schwimmenden Vorrichtungen nach einem der Ansprüche 1 bis 12 benachbart zueinander anordnen, mit der ersten Oberfläche (2) zur Abwasseroberfläche hin ausgerichtet, und wobei die Vielzahl von schwimmenden Vorrichtungen (1) so viele schwimmende Vorrichtungen (1) aufweist, die benachbart zueinander angeordnet sind, dass die Anordnung mindestens 95% der Abwasseroberfläche (P) abdeckt,
[b] die Vielzahl von schwimmenden Vorrichtungen (1) UV-Licht aussetzen, so dass, wenn die von dem Abwasser abgegebenen Gase (16) an der photokatalytischen Oberfläche vorbeiströmen, die Gase durch Photokatalyse behandelt werden.

## Revendications

1. Dispositif flottant (1) pour traiter des gaz (16) émis par des eaux usées contenues dans un récipient d'eaux usées, ledit dispositif flottant (1) comprenant :
[a] une première surface (2) qui, lorsque le dispositif flottant flotte sur la surface d'eaux usées, est orientée vers ladite surface d'eaux usées (P),
[b] une seconde surface (4), opposée à ladite première surface (2), et
[c] une surface photocatalytique (8) agencée sur au moins une partie de la surface dudit dispositif flottant (1), de sorte que, lorsque le dispositif flottant flotte sur la surface d'eaux usées, lorsque lesdits gaz (16) émis par lesdites eaux usées s'écoulent par ladite surface photocatalytique, lesdits gaz soient traités par photocatalyse,
**caractérisé en ce que** ledit dispositif flottant (1) comprend en outre
[d] au moins une première ouverture (10) s'étendant dans la direction allant de ladite première surface (2) à ladite seconde surface (4), ladite au moins une première ouverture (10) définissant une surface intérieure, et
[e] ladite surface photocatalytique (8) est agencée au moins sur ladite surface intérieure de ladite première ouverture (10).

2. Dispositif flottant (1) selon la revendication 1, **caractérisé en ce qu'il** comprend en outre
[a] une section prismatique (6) reliant lesdites première et seconde surfaces (2, 4),
[b] ladite section prismatique (6) ayant une section transversale parmi l'une du groupe constitué de triangulaire, quadrangulaire ou hexagonale.

3. Dispositif flottant (1) selon la revendication 2, **caractérisé en ce que** ladite surface photocatalytique (8) est agencée sur la surface de ladite section prismatique (6).

4. Dispositif flottant (1) selon l'une des revendications 1 à 3, **caractérisé en ce que** ladite première surface (2) est convexe.

5. Dispositif flottant (1) selon l'une des revendications 1 à 4, **caractérisé en ce que** ladite seconde surface (4) est convexe.

6. Dispositif flottant (1) selon l'une des revendications 1 à 5, **caractérisé en ce que** ledit dispositif flottant (1) comprend en outre une pluralité de nervures (12) faisant saillie depuis au moins ladite première surface (2) et/ou au moins ladite seconde surface (4), chacune desdites nervures s'étendant du bord vers le centre dudit dispositif flottant (1).

7. Dispositif flottant (1) selon la revendication 6, **caractérisé en ce que,** lesdites nervures (12) définissent un trajet en forme d'arc depuis ledit bord vers ledit centre dudit dispositif flottant.

8. Dispositif flottant (1) selon l'une des revendications 6 ou 7, **caractérisé en ce que** la hauteur desdites nervures (12) augmente depuis ledit bord vers ledit centre dudit dispositif flottant.

9. Dispositif flottant selon l'une des revendications 6 à 8, **caractérisé en ce qu'**au moins une nervure (12) de ladite pluralité de nervures comprend une seconde ouverture (14), ladite seconde ouverture (14) s'étendant à travers ladite nervure (12) dans la direction allant de ladite première surface à ladite seconde surface et définissant une seconde surface intérieure (15), et **en ce que** ladite surface photocatalytique (8) est agencée au moins sur ladite seconde surface intérieure.

10. Dispositif flottant (1) selon l'une des revendications 1 à 9, **caractérisé en ce que** ladite surface photocatalytique (8) est agencée de sorte qu'elle couvre complètement ledit dispositif flottant (1).

11. Dispositif flottant (1) selon l'une des revendications 1 à 10, **caractérisé en ce que** ladite surface photocatalytique (8) comprend des nanoparticules d'oxyde métallique.

12. Dispositif flottant (1) selon la revendication 11, **caractérisé en ce que** ladite surface photocatalytique (8) comprend au moins des nanoparticules d'oxyde métallique parmi le groupe constitué par des nanoparticules de dioxyde de titane, des nanoparticules de dioxyde de silice, le dioxyde de zirconium, des nanoparticules de trioxyde d'aluminium et des nanoparticules d'oxyde métallique-zéolite ou un mélange de ceux-ci.

13. Agencement de dispositifs flottants (100) pour traiter les gaz (16) émis par les eaux usées contenues dans un récipient d'eaux usées, **caractérisé en ce qu'il** comprend une pluralité de dispositifs flottants (1) selon l'une des revendications 1 à 12 agencés de manière adjacente les uns aux autres, ladite première surface (2) étant orientée vers la surface d'eaux usées, et ladite pluralité de dispositifs flottants (1) ayant autant de dispositifs flottants (1) agencés de manière adjacente les uns aux autres que ledit agencement couvre au moins 95% de ladite surface d'eaux usées (P).

14. Procédé de traitement des gaz (16) émis par les eaux usées (W) contenues dans un récipient d'eaux usées, **caractérisé en ce que** ledit procédé comprend les étapes suivantes :
[a] l'agencement d'une pluralité de dispositifs flottants selon les revendications 1 à 12 de manière adjacente les uns aux autres, ladite première surface (2) étant orientée vers la surface d'eaux usées, et ladite pluralité de dispositifs flottants (1) ayant autant de dispositifs flottants (1) agencés de manière adjacente les uns aux autres que ledit agencement couvre au moins 95% de ladite surface d'eaux usées (P),
[b] l'exposition de ladite pluralité de dispositifs flottants (1) à une lumière UV, de sorte que lorsque lesdits gaz (16) émis par lesdites eaux usées s'écoulent par ladite surface photocatalytique, lesdits gaz soient traités par photocatalyse.
